Europäisches Patentamt

European Patent Office

Office européen des brevets

(11) Numéro de publication : **0 419 315 B1**

# (12) FASCICULE DE BREVET EUROPEEN

(45) Date de publication du fascicule du brevet :
30.03.94 Bulletin 94/13

(21) Numéro de dépôt : **90402464.3**

(22) Date de dépôt : **07.09.90**

(51) Int. Cl.⁵ : **H04N 7/01**, H04N 5/44, H04N 7/137

(54) **Procédé de détection de mouvement à la fréquence trame et au nombre de lignes souhaités, et dispositif pour sa mise en oeuvre.**

(30) Priorité : **08.09.89 FR 8911752**

(43) Date de publication de la demande :
**27.03.91 Bulletin 91/13**

(45) Mention de la délivrance du brevet :
**30.03.94 Bulletin 94/13**

(84) Etats contractants désignés :
**DE ES FR GB IT NL**

(56) Documents cités :
**EP-A- 0 306 250
EP-A- 0 316 231
EP-A- 0 327 982
DE-A- 2 937 284**

(73) Titulaire : **LABORATOIRE EUROPEEN DE RECHERCHES ELECTRONIQUES AVANCEES
9, Place des Vosges La Défense 5
F-92400 Courbevoie (FR)**

(72) Inventeur : **Gillies, David
THOMSON-CSF, SCPI, Cédex 67
F-92045 Paris la Défense (FR)**
Inventeur : **Moraillon, Jean-Yves
THOMSON-CSF, SCPI, Cédex 67
F-92045 Paris la Défense (FR)**

(74) Mandataire : **Ruellan-Lemonnier, Brigitte et al
THOMSON-CSF, SCPI, B.P. 329, 50, rue
Jean-Pierre Timbaud
F-92402 Courbevoie Cédex (FR)**

EP 0 419 315 B1

Jouve, 18, rue Saint-Denis, 75001 PARIS

## Description

La présente invention concerne un procédé de détection de mouvement à la fréquence trame et au nombre de lignes souhaltés ainsi qu'un dispositif pour sa mise en oeuvre. Elle concerne plus particulièrement un perfectionnement au procédé et au dispositif de détectlon de mouvement décrits dans la demande de brevet allemand DE-A-38 09 249 au nom de Deutsche Thomson Brandt et dans la demande de brevet français N°89 03861 au nom du Laboratoire Européen de Recherches Electroniques Avancées (L.E.R.E.A.). Dans la demande de brevet français N°89 03861 (FR-A-2 644 956) du 23/03/89 au nom de la Demanderesse, publiée le 28 septembre 1990, on a décrit un dispositif permettant de convertir les signaux vidéo reçus en entrée d'un récepteur de télévision haute définition, notamment des signaux d'entrée 1250/2:1/50Hz HD-MAC décodés ou des signaux 625/2:1/50Hz PAL, SECAM ou MAC décodés en un signal d'affichage haute définition, à savoir un signal permettant un affichage sur 1250 lignes ou 900 lignes avec un entrelacement 2:1 à une fréquence trame de 100Hz. Ce dispositif de conversion de fréquence trame comporte un dispositif de traitement des signaux d'entrée de type statique et un dispositif de traitement des signaux d'entrée de type dynamique. La commutation entre le dispositif de traitement des signaux d'entrée de type dynamique et le dispositif de traitement des signaux d'entrée de type statique est commandée par un signal de détection de mouvement. Lorsque les signaux en entrée du récepteur sont constitués par des signaux au standard actuel, à savoir des signaux 625/2:1/50Hz PAL, SECAM ou MAC décodés, le signal de détection de mouvement est issu d'un circuit spécifique appelé détecteur de mouvement. Un tel circuit est décrit notamment dans la demande de brevet allemand N° 38 09 249 au nom de Deutsche Thomson Brandt ou dans la demande de brevet français N°89 03861 au nom de L.E.R.E.A. Le signal de détectlon de mouvement issu des circuits décrits dans ces demandes permet un affichage une fréquence trame de 100Hz sur 1250 lignes. Toutefois, lorsque l'affichage est un affichage de type 900/2:1/100Hz, le signal de détection de mouvement n'est plus synchrone du signal vidéo afficher.

En conséquence, la présente invention a pour but de proposer un perfectionnement au procédé de détection de mouvement décrit dans les brevets mentionnés ci-dessus, qui permet d'utiliser l'information de détection de mouvement lors d'un affichage haute définition de type 900/2:1/100Hz.

La présente invention a aussi pour but de proposer un dispositif permettant de transformer le détecteur de mouvement classique en un dispositif donnant un signal de détection de mouvement à la fréquence trame et au nombre de lignes souhaités.

La présente invention a encore pour but de proposer un dispositif de détection de mouvement qui peut être utilisé pour un affichage de type 1250/2:1/100Hz, 900/2:1/100Hz ou présentant des caractéristiques différentes au niveau du nombre de lignes.

En conséquence, la présente invention a pour objet un procédé de détectlon de mouvement donnant une information de mouvement à la fréquence trame et au nombre de lignes souhaltés, caractérisé en ce qu'il consiste appliquer au niveau des points-image de même position spatiale correspondant à deux images temporellement différentes données par un signal à la fréquence trame et au nombre de lignes du signal vidéo d'entrée, l'algorithme suivant :

$$DP_{on} = \sum_{j=-\lambda}^{\lambda} K_y \left| P_{yn} - P_{y(n-1)} \right|$$

(avec y un entier correspondant à des adresses de ligne adjacentes autour d'une ligne de référence, n et n-1 à deux images temporellement différentes et $K_y$ au coefficient de filtrage verticale de la ligne considérée),
- puis à comparer la valeur obtenue $DP_{on}$ à une valeur de seuil et à émettre une information de mouvement ou de non mouvement en fonction du résultat de la comparaison.

Selon une autre caractéristique de la présente invention, une information de mouvement finale est obtenue en prenant une décision majoritaire sur les informations de mouvement données par plusieurs images de position spatiale différente appartenant à une même ligne image.

La présente invention a aussi pour objet un dispositif pour la mise en oeuvre du procédé ci-dessus caractérisé en ce qu'il comporte :
- au moins quatre mémoires de trame pour stocker les trames paires et impaires de deux images successives,
- deux circuits de traitement identiques connectés respectivement en sortie des mémoires de trames paires et des mémoires de trames impaires, chaque circuit étant constitué par un soustracteur, un détecteur de valeur absolue et un circuit de filtrage vertical,

- un additionneur recevant les sorties des deux circuits de traitement, et
- un comparateur comparant la sortie de l'additionneur à une valeur de seuil pour sortir une information de mouvement.

Selon un mode de réalisation préférentiel, le dispositif comporte :
- n cellules à retard (n > 1), et
- un circuit logique recevant les sorties du comparateur et des n cellules à retard et réalisant une décision majoritaire de manière à sortir une information de mouvement finale.

Selon un mode de réalisation préférentiel, permettant de réaliser sans mémoire supplémentaire la conversion en fréquence du signal de détection de mouvement, les mémoires sont écrites en parallèle à la fréquence trame du signal d'entrée et sont lues en parallèle à la fréquence trame du signal de sortie, l'écriture et la lecture étant réalisées sous contrôle de signaux de commande d'écriture et de lecture spécifiques.

D'autre part, le circuit de filtrage vertical est constitué par n cellules à retard donnant un retard d'une ligne mémoire, n + 1 multiplicateurs recevant chacun sur une entrée un coefficient multiplicateur spécifique et sur l'autre entrée soit l'entrée de la première cellule, soit la sortie des n cellules, un premier additionneur additionnant la sortie des deux premiers multiplicateurs et n additionneurs additionnant la sortie de l'additionneur précédant et celle du multiplicateur de rang n + 1. En fait, en fonction de la valeur du coefficient multiplicateur, l'affichage pourra être réalisé sur 1250 lignes, 900 lignes ou sur un nombre de lignes différent.

D'autres caractéristiques et avantages de la présente invention apparaîtront à la lecture de la description faite ci-après d'un mode de réalisation préférentiel d'un dispositif de détection de mouvement conforme à la présente invention, avec référence aux dessins ci-annexés dans lesquels :
- la figure 1 est un schéma synoptique d'un dispositif de détection du mouvement dans une image de télévision haute définition conforme à la présente invention, et
- la figure 2 est un chronogramme expliquant le fonctionnement des mémoires du dispositif de la figure 1.

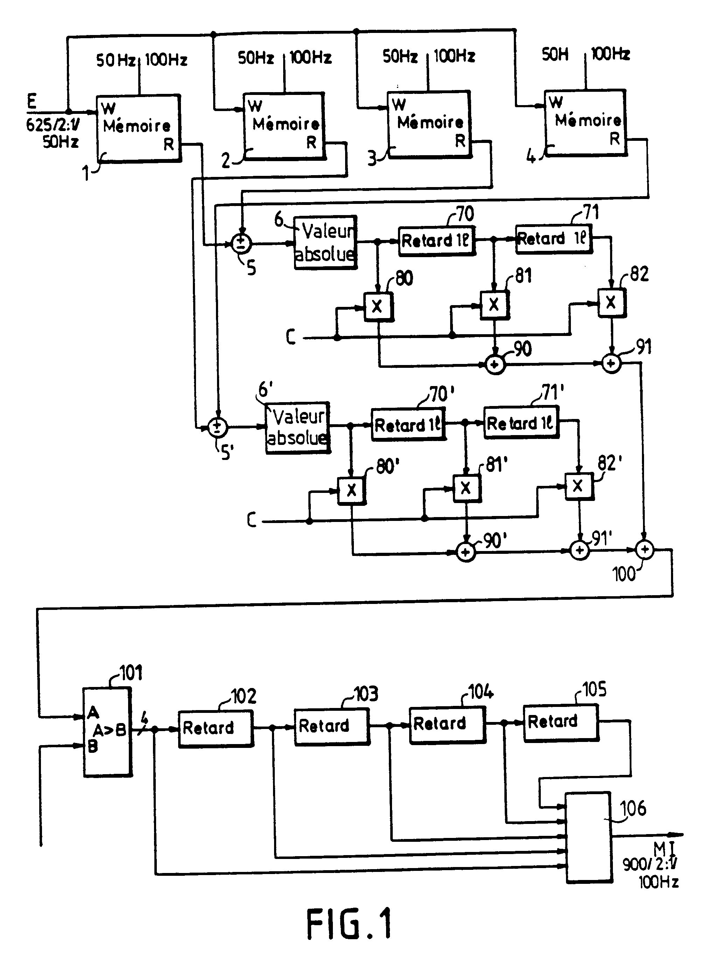

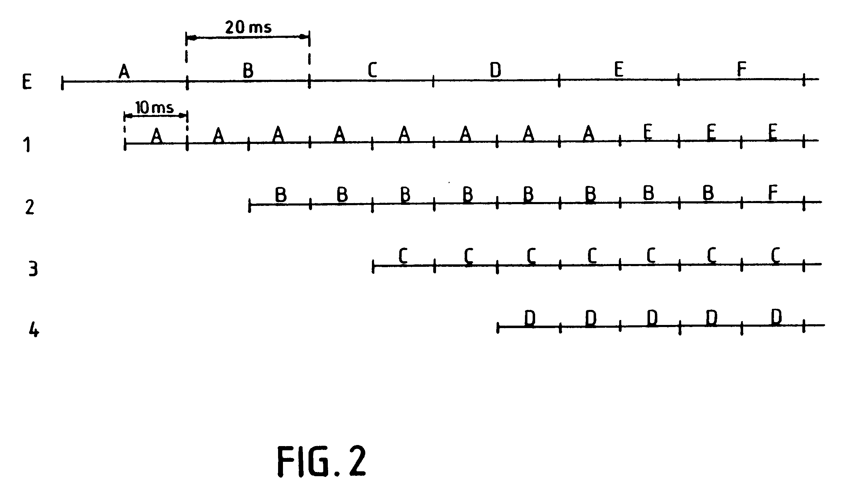

Comme représenté sur la figure 1, le dispositif de détection de mouvement conforme à la présente invention comporte quatre mémoires de trame 1, 2, 3, 4 permettant de détecter un mouvement entre deux images contenues dans un signal vidéo en entrée E de type 625/2:1/50Hz PAL, SECAM, MAC ou similaire. Chaque mémoire de trame 1, 2, 3, 4 a une capacité de 288 x 720 x 8 (288 correspondant aux lignes utiles, 720 au nombre de points images ou pixels utiles par ligne et 8 au nombre de bits de codage de chaque pixel). Dans le mode de réalisation représenté, les mémoires 1, 2, 3, 4 sont écrites en parallèle sous commande d'une impulsion d'écriture et sont lues en parallèle sous commande d'une impulsion de lecture. L'utilisation de mémoires en parallèle permet d'écrire les mémoires à la fréquence trame du signal vidéo d'entrée, savoir 50Hz et de les lire à la fréquence trame du signal vidéo en sortie choisie pour un affichage haute définition, à savoir 100Hz dans le présent cas. Eventuellement, les mémoires 1, 2, 3, 4, peuvent être connectées en série. Dans ce cas, il est nécessaire d'utiliser au moins une mémoire supplémentaire pour réaliser la conversion 50Hz/100Hz. Ainsi, dans le dispositif de la présente invention, une première image (n) est stockée dans la mémoire de trame impaire 1 et la mémoire de trame paire 2 tandis qu'une seconde image (n - 1) est stockée ultérieurement dans la mémoire de trame impaire 3 et la mémoire de trame paire 4. La stockage est réalisé, par exemple, comme représenté sur la figure 2. La signal E correspond à un signal vidéo en entrée de type 625/2:1/50Hz et représente les trames successives A, B, C, D, E, F, etc ... dont la durée est de 20 millisecondes. Dans ce cas, les trames impaires A, C, E sont stockées dans les mémoires de trame 1 et 3 de telle sorte que les trames A et E soient stockées dans la mémoire 1, et la trame C dans la mémoire 3. De même, les trames paires B, D, F sont stockées dans les mémoires 2 et 4 de telle sorte que les trames B et F sont stockées dans la mémoire 2, et la trame D dans la mémoire 4. l'as mémoires 1, 2, 3, 4 sont lues à une fréquence de 100Hz, à savoir en 10 millisecondes. Ainsi, dans les mémoires 1, 2, 3, 4, huit trames A ou B ou C ou D, ... sont maintenues chacune pendant 10 millisecondes.

Lorsque le dispositif de détection de mouvement conforme à la présente invention est utilisé dans un dispositif de conversion de fréquence trame tel que décrit dans la demande de brevet français N°89 03861, les mémoires 1, 2, 3, 4 font déjà partie du dispositif de conversion de fréquence. Ceci permet de réduire la capacité mémoire nécessaire pour l'ensemble du dispositif et ainsi de diminuer la surface de semi-conducteur nécessaire pour la réalisation d'un téléviseur.

On décrira maintenant avec référence à la figure 1, la partie permettant d'obtenir une information de mouvement synchrone d'un signal d'affichage haute définition de type 900/2:1/100Hz. Les sorties des mémoires de trames impaires 1 et 3 sont envoyées sur un soustracteur 5 soustrayant le codage d'un pixel contenu dans la mémoire de trame 1 au codage du pixel de même position spatiale contenue dans la mémoire de trame 3. De même, les sorties des mémoires de trames paires 4 et 2 sont envoyées sur un soustracteur 5' qui fonctionne de manière identique au soustracteur 5. La sortie de chaque soustracteur 5 et 5' est envoyée respectivement sur un circuit prenant la valeur absolue 6, 6'. Les sorties des circuits 6 et 6' sont envoyées chacune sur un circuit de traitement réalisant le filtrage et la sommation des valeurs absolues. Chaque circuit en sortie des circuits 6, 6' est identique. Il est constitué de deux cellules à retard 70, 71 ou 70', 71'. Chaque cellule a un retard d'une ligne. D'autre part, comme représenté sur la figure 1, le circuit comporte trois multiplicateurs 80, 81, 82 ou 80', 81', 82'. Les multiplicateurs 80, 81, 82 ou 80', 81', 82' reçoivent respectivement sur une de leurs entrées un coefficient multiplicateur spécifique sous l'action d'une impulsion de commande C. Le multiplicateur 80 ou 80' reçoit sur son autre entrée la sortie du circuit de valeurs absolues 6 ou 6'. Les autres multiplicateurs 81 et 82 reçoivent sur leurs autres entrées respectivement la sortie des cellules retard 70, 71 ou 70', 71'. D'autre part, le circuit comporte deux additionneurs 90, 91, 90', 91'. La circuit 90 reçoit respectivement les sorties des multiplicateurs 80, 81, 80', 81' tandis que l'additionneur 91, 91' reçoit respectivement sur ses entrées les sorties de l'additionneur 90 ou 90' et du multiplicateur 82 ou 82'. La nombre de cellules du circuit ci-dessus est en fait fonction du nombre de lignes que l'on souhaite pondérer pour l'application du procédé de détection de mouvement conforme à la présente invention.

Ainsi, avec le circuit ci-dessus, si l'on référence $P_o$, le pixel pour lequel on désire détecter une information de mouvement, $P_0$ étant un pixel impair et si l'on appelle $P_2$ et $P_{-2}$, deux pixels pairs appartenant à des lignes adjacentes mais de même abscisse ainsi que $P_{-1}$, $P_1$ et $P_3$ les pixels des trames impaires de même abscisse, on obtient en sortie des circuits de valeurs absolues et des lignes à retard 70, 71 et 70', 71' les données suivantes :

- en sortie du circuit 6 : $P_{-2n} - P_{-2\,(n-1)}$ ;
- en sortie du circuit 70 : $P_{on} - P_{o\,(n-1)}$;
- en sortie du circuit 71 : $P_{2n} - P_{2\,(n-1)}$;
- en sortie du circuit 6' : $P_{-1n} - P_{-1\,(n-1)}$ ;
- en sortie du circuit à retard 70' : $P_{1n} - P_{1\,(n-1)}$ ;
- en sortie du circuit à retard 71' : $P_{3n} - P_{3\,(n-1)}$

dans lequel n et n-1 correspondent à deux images successives. Sur ces différentes valeurs de sortie, on applique à l'aide des multiplicateurs 80, 81, 82, 80', 81', 82' des coefficients $K_y$ où y prend des valeurs comprises entre -1 et 3. Puis on réalise l'addition des sorties pondérées de telle sorte qu'en sortie de l'additionneur 100 on obtient :

$$A = K_{-2}\left|P_{-2n} - P_{-2(n-1)}\right| + K_{-1}\left|P_{-1n} - P_{-1(n-1)}\right| + K_o\left|P_{on} - P_{o(n-1)}\right| + K_2\left|P_{2n} - P_{2(n-1)}\right| + K_3\left|P_{3n} - P_{3(n-1)}\right|$$

On réalise ainsi l'algorithme :

$$DP_{on} = \sum_{j=-i}^{+i} K_y\left| P_{yn} - P_{y(n-1)}\right|$$

La sortie de l'additionneur 100 est envoyée en entrée du comparateur 101 qui compare la valeur A obtenue à une valeur de seuil B, donnant en sortie "1" si A est supérieure à B, et "0" si A est inférieure ou égale à B. Les sorties du comparateur 101 sont envoyées en série dans des cellules de stockage 102, 103, 104, 105 réalisant un retard correspondant au calcul d'un $DP_{on}$, de sorte qu'au bout de cinq calculs de $DP_{on}$, on effectue une comparaison dans une logique majoritaire 106 de manière à envoyer une information de mouvement majoritaire en fonction des cinq informations de mouvement, par exemple une information de mouvement "1" si trois des informations de mouvement issues des cellules 102, 103, 104, 105 et du comparateur 101 sont codées par "1". Cette information de mouvement est utilisée notamment par un dispositif de conversion de fréquence tel que décrit dans la demande de brevet français N°89 03861. Dans le cas ci-dessus on a décrit un système réalisant une détection de mouvement en utilisant six lignes mémoires. Il est évident pour l'homme de l'art, qu'en jouant sur le nombre des cellules à retard 70, 71 ou 70', 71' et/ou éventuellement sur le nombre des cellules à retard 102, 103, 104, 105, on détectera l'information de mouvement avec plus ou moins de précision. Dans la pratique, il semble intéressant de détecter l'information de mouvement en se basant sur une détection de mouvement réalisée pour cinq lignes adjacentes et cinq points adjacents.

D'autre part, en fonction du choix des coefficients appliqués sur les multiplicateurs 80, 81, 82 ou 80', 81', 82', l'affichage pourra être réalisé sur un nombre de lignes autres que 900 lignes, notamment 1250 lignes, en utilisant le même dispositif de détection de mouvement.

**Revendications**

1. Procédé de détection de mouvement donnant une information de mouvement à la fréquence trame et au nombre de lignes souhaités, caractérisé en ce qu'il consiste à appliquer au niveau des points image de même position spatiale correspondant à deux images temporellement différentes données par un signal à la fréquence trame et au nombre de lignes du signal vidéo d'entrée, l'algorithme suivant :

$$DP_{on} = \sum_{j=-i}^{+i} K_y \left| P_{yn} - P_{y(n-1)} \right|$$

(avec y un entier correspondant à des adresses de lignes adjacentes autour d'une ligne de référence, n et n-1 à deux images temporellement différentes et $K_y$ au coefficient de filtrage verticale de la ligne considérée),
- puis à comparer la valeur obtenue $DP_{on}$ à une valeur de seuil et à émettre une information de mouvement ou de non mouvement en fonction du résultat de la comparaison.

2. Procédé selon la revendication 1, caractérisé en ce que l'algorithme est appliqué en utilisant les points-image appartenant à cinq lignes image consécutives.

3. Procédé selon l'une quelconque des revendications 1 et 2, caractérisé en ce qu'une information de mouvement finale est obtenue en prenant une décision majoritaire sur les informations de mouvement données par plusieurs points-image de position spatiale différente appartenant à une même ligne image.

4. Dispositif pour la mise en oeuvre du procédé selon l'une quelconque des revendications 1 à 3, caractérisé en ce qu'il comporte :
   - au moins quatre mémoires (1, 2, 3, 4) de trame pour stocker les trames paires et impaires de deux images successives,
   - deux circuits de traitement identiques (5, 6, 70, 71, 80, 81, 82, 90, 91 et 5', 6', 70', 71', 80', 81', 82', 90', 91') connectés respectivement en sortie des mémoires de trames paires et des mémoires de trames impaires, chaque circuit étant constitué par un soustracteur, un détecteur de valeur absolue et un circuit de filtrage vertical,
   - un additionneur (100) recevant les sorties des deux circuits de traitement, et
   - un comparateur (101) comparant la sortie de l'additionneur une valeur de seuil pour sortie une information de mouvement.

5. Dispositif selon la revendication 4, caractérisé en ce qu'il comporte de plus :
   - n cellules à retard (102, 103, 104, 105) (n > 1) connectées en sortie du comparateur, et
   - un circuit logique (106) recevant les sorties du comparateur et des n cellules à retard et réalisant une décision majoritaire de manière à sortir une information de mouvement finale.

6. Dispositif selon l'une quelconque des revendications 4 et 5, caractérisé en ce que les mémoires sont écrites en parallèle à la fréquence trame du signal d'entrée et sont lues à la fréquence trame du signal de sortie, l'écriture et la lecture étant réalisées sous contrôle de signaux de commande d'écriture et de lecture spécifiques.

7. Dispositif selon l'une quelconque des revendications 4 à 6, caractérisé en ce que le circuit de filtrage vertical est constitué par n cellules à retard (70, 71 et 70', 71') donnant un retard d'une ligne mémoire, n + 1 multiplicateurs (80, 81, 82 et 80', 81', 82') recevant chacun sur une entrée un coefficient multiplicateur spécifique et sur l'autre entrée soit l'entrée de la première cellule, soit la sortie des n cellules, un premier additionneur (90 et 90') additionnant la sortie des deux premiers multiplicateurs et n additionneurs (91 et 91') additionnant la sortie de l'additionneur précédant et celle du multiplicateur de rang n + 1.

**Patentansprüche**

1. Bewegungsdetektionsverfahren, das eine Bewegungsinformation mit der gewünschten Teilbildfrequenz und Zeilenzahl ergibt, dadurch gekennzeichnet, daß es darin besteht, auf der Stufe der Bildpunkte mit der gleichen räumlichen Position, die zwei zeitlich unterschiedlichen Bildern entsprechen, die durch ein Signal mit der Teilbildfrequenz und der Zeilenzahl des Eingangs-Videosignals gegeben sind, und den folgenden Algorithmus anzuwenden:

$$DP_{on} = \sum_{y=-i}^{+i'} K_y \left| P_{yn} - P_{y(n-1)} \right|$$

(wobei y eine ganze Zahl ist und benachbarten Zeilenadressen um eine Referenzzeile entspricht, n und n-1 zwei zeitlich unterschiedlichen Bildern entsprechen und $K_y$ dem Koeffizienten der Vertikalfilterung der betrachteten Zeile entspricht),
dann den den erhaltenen Wert $DP_{on}$ mit einem Schwellenwert zu vergleichen und eine Information der Bewegung oder der Nichtbewegung abhängig vom Ergebnis des Vergleichs abzugeben.

2. Verfahren nach Anspruch 1, dadurch gekennzeichnet, daß der Algorithmus unter Verwendung der Punktbilder angewendet wird, die zu fünf aufeinanderfolgenden Bildzeilen gehören.

3. Verfahren nach einem der Ansprüche 1 und 2, dadurch gekennzeichnet, daß eine End-Bewegungsinformation erhalten wird, in dem eine Majoritätsentscheidung über die Bewegungsinformationen getroffen wird, die durch mehrere einer gleichen Bildzeile angehörenden Bildpunkten mit unterschiedlicher räumlicher Position gegeben sind.

4. Vorrichtung zur Durchführung des Verfahrens nach einem der Ansprüche 1 bis 3, dadurch gekennzeichnet, daß es enthält:
   - wenigstens vier Teilbildspeicher (1, 2, 3, 4) zum Speichern der geradzahligen und ungeradzahligen Teilbilder von zwei aufeinanderfolgenden Bildern,
   - zwei gleiche Verarbeitungsschaltungen (5, 6, 70, 71, 80, 81, 82, 90, 91 und 5', 6', 70', 71', 80', 81', 82', 90', 91'), die jeweils am Ausgang der Speicher gerader Teilbilder und der Speicher ungerader Teilbilder angeschlossen sind, wobei jede Schaltung von einer Subtrahiereinheit, einem Absolutwertdetektor und einer Vertikalfilterschaltung gebildet ist,
   - eine Addiereinheit (100), die die Ausgangssignale der zwei Verarbeitungsschaltungen empfängt, und
   - einen Komparator (101), der das Ausgangssignal der Addiereinheit mit einem Schwellenwert zur Abgabe einer Bewegungsinformation vergleicht.

5. Vorrichtung nach Anspruch 4, dadurch gekennzeichnet, daß sie ferner enthält:
   - n Verzögerungszellen (102, 103, 104, 105) (n>1), die am Ausgang des Komparators angeschlossen sind, und
   - eine Logikschaltung (106), die die Ausgangssignale des Komparators und der n Verzögerungszellen empfängt und eine Majoritätsentscheidung in der Weise trifft, daß eine End-Bewegungsinformation abgegeben wird.

6. Vorrichtung nach einem der Ansprüche 4 und 5, dadurch gekennzeichnet, daß das Schreiben in die Speicher parallel mit der Teilbildfrequenz des Eingangssignals erfolgt und das Lesen mit der Teilbildfrequenz des Ausgangssignals erfolgt, wobei das Schreiben und das Lesen unter der Steuerung durch spezielle Schreib- und Lesesteuersignale erfolgt.

7. Vorrichtung nach einem der Ansprüche 4 bis 6, dadurch gekennzeichnet, daß die Vertikalfilterschaltung gebildet ist aus n Verzögerungszellen (70, 71 und 70', 71'), die eine Verzögerung um eine Speicherzeile ergeben, n+1 Multipliziereinheiten (80, 81, 82 und 80', 81', 82'), die an einem Eingang jeweils einen speziellen Multiplikationskoeffizienten und am anderen Eingang entweder das Eingangssignal der ersten Zelle oder das Ausgangssignal von n Zellen empfängt, eine erste Addiereinheit (90 und 90'), die das Ausgangssignal der zwei ersten Multipliziereinheiten addiert, sowie n Addiereinheiten (91 und 91'), die das Ausgangssignal der vorhergehenden Addiereinheit und der Multipliziereinheit der Rangordnung n+1 empfängt.

## Claims

1. Method for detecting motion giving an indication of motion at the desired frame frequency and with the desired number of lines, characterised in that it consists in applying in respect of the image points of like spatial position corresponding to two temporally different images given by a signal at the frame frequency and with the number of lines of the input video signal, the following algorithm:

$$DP_{on} = \sum_{J=-\lambda}^{\lambda} K_y \mid P_{yn} - P_{y(n-1)} \mid$$

(with y an integer corresponding to addresses of adjacent lines around a reference line, n and n-1 to two temporally different images and $K_y$ to the vertical filtering coefficient for the relevant line),
- in then comparing the value obtained $DP_{on}$ with a threshold value and in sending an indication of motion or of non-motion depending on the result of the comparison.

2. Method according to Claim 1, characterised in that the algorithm is applied using the image points belonging to five consecutive image lines.

3. Method according to either of Claims 1 or 2, characterised in that a final indication of motion is obtained by making a majority decision about the indications of motion given by several image points with different spatial position belonging to the same image line.

4. Device for implementing the method according to any one of Claims 1 to 3, characterised in that it includes:
   - at least four frame memories (1, 2, 3, 4) for storing the even and odd frames of two successive images,
   - two identical methoding circuits (5, 6, 70, 71, 80, 81, 82, 90, 91 and 5', 6', 70', 71', 80', 81', 82', 90', 91') connected respectively at the output of the even frame memories and odd frame memories, each circuit consisting of a subtracter, a detector of absolute value and a vertical filtering circuit,
   - an adder (100) receiving the outputs from the two methoding circuits, and
   - a comparator (101) comparing the output from the adder with a threshold value in order to output an indication of motion.

5. Device according to Claim 4, characterised in that it furthermore includes:
   - n delay cells (102, 103, 104, 105) (n > 1) connected at the output of the comparator, and
   - a logic circuit (106) receiving the outputs from the comparator and from the n delay cells and making a majority decision so as to output a final indication of motion.

6. Device according to either one of Claims 4 or 5, characterised in that the memories are written in parallel at the frame frequency of the input signal and are read at the frame frequency of the output signal, writing and reading being carried out under the supervision of specific write and read control signals.

7. Device according to any one of Claims 4 to 6, characterised in that the vertical filtering circuit consists of n delay cells (70, 71 and 70', 71') giving a delay of one memory line, n + 1 multipliers (80, 81, 82 and 80', 81', 82') each receiving on one input a specific multiplier coefficient and on the other input either the input of the first cell, or the output from the n cells, a first adder (90 and 90') adding the output from the first two multipliers and n adders (91 and 91') adding the output from the preceding adder and that from the multiplier of rank n + 1.

EP 0 419 315 B1

FIG.1

8

FIG. 2